# FASCICULE DE BREVET EUROPEEN

(11) **EP 2 546 974 B1**
(45) Date de publication et mention de la délivrance du brevet: **25.06.2014**
(21) Numéro de dépôt: 12172205.2
(22) Date de dépôt: 15.06.2012
(51) Int. Cl.: H02M 1/36, H02M 7/5387, H02M 1/32

(54) **Convertisseur de puissance comportant un module onduleur à transistors à effet de champ normalement fermés**
Leistungswandler, der ein Wechselrichtermodul mit selbstleitenden Feldeffekttransistoren umfasst
Power converter comprising an inverter module using normally on field effect transistors

(30) Priorité: 13.07.2011 FR 1156382
(43) Date de publication de la demande: 16.01.2013
(73) Titulaire: Schneider Toshiba Inverter Europe SAS, 27120 Pacy sur Eure (FR)
(72) Inventeur: Barauna, Allan Pierre, 27200 Vernon (FR)
(74) Mandataire: Bié, Nicolas

(56) Documents cités:
- EP-A1- 2 093 871
- EP-A1- 2 267 880
- FR-A1- 2 943 474
- FRIEDLI T ET AL: "Design and Performance of a 200-kHz All-SiC JFET Current DC-Link Back-to-Back Converter", IEEE TRANSACTIONS ON INDUSTRY APPLICATIONS, IEEE SERVICE CENTER, PISCATAWAY, NJ, US, vol. 45, no. 5, 1 septembre 2009 (2009-09-01), pages 1868-1878, XP011270486, ISSN: 0093-9994, DOI: 10.1109/TIA.2009.2027538

## Description

### Domaine technique de l'invention

La présente invention se rapporte à un convertisseur de puissance comportant des transistors à effet de champ de type normalement fermé.

### Etat de la technique

De manière connue, un convertisseur de puissance destiné à commander une charge électrique comporte principalement :
- un bus continu d'alimentation sur lequel est appliquée une tension redressée, le bus continu d'alimentation étant doté d'un ou plusieurs condensateurs de bus permettant de maintenir la tension du bus à une valeur constante,
- en sortie, un module onduleur destiné à transformer la tension du bus continu d'alimentation en une tension variable à appliquer à la charge électrique.

Le convertisseur peut également comporter en entrée un module redresseur composé en règle générale d'un pont de diodes destiné à redresser la tension alternative fournie par un réseau électrique.

Le module onduleur comporte plusieurs bras de commutation, en règle générale trois bras de commutation connectés à la ligne positive et à la ligne négative du bus continu d'alimentation. Pour le module onduleur, les transistors employés sont par exemple à effet de champ et de type normalement fermé, leur chemin Drain-Source étant passant en l'absence d'une tension de commande appliquée sur leur Grille. Pour assurer son blocage, chaque transistor doit ainsi être commandé à l'aide d'un dispositif de commande spécifique permettant de lui appliquer une tension de commande adaptée. Les dispositifs de commande des transistors sont alimentés par un système d'alimentation auxiliaire connecté à la ligne positive et à la ligne négative du bus continu d'alimentation.

Lors du démarrage du convertisseur de puissance, le système d'alimentation auxiliaire n'est pas chargé, empêchant alors toute commande des transistors. Même si le module onduleur emploie des transistors à effet de champ de type normalement fermé, il faut permettre au démarrage le chargement du condensateur de bus pour charger le système d'alimentation auxiliaire.

L'état de la technique décrit dans le document FR-2.943.474 divulgue un tel convertisseur de puissance.

Le but de l'invention est de proposer un convertisseur de puissance employant des bras de commutation à composants normalement fermés et permettant la montée en tension du bus au démarrage.

### Exposé de l'invention

Ce but est atteint par un convertisseur de puissance destiné à la commande d'une charge électrique, comportant :
- un bus continu d'alimentation sur lequel est appliquée une tension redressée et comportant une ligne d'alimentation positive et une ligne d'alimentation négative,
- un module onduleur connecté en amont au bus continu d'alimentation et en aval à plusieurs phases de sortie,
- un condensateur de bus, connecté à la ligne d'alimentation positive et à la ligne d'alimentation négative du bus continu d'alimentation,
- le module onduleur comportant plusieurs bras de commutation connectés entre la ligne d'alimentation positive et la ligne d'alimentation négative du bus continu d'alimentation, chaque bras de commutation comportant un transistor haut et un transistor bas en série et un point milieu de connexion situé entre le transistor haut et le transistor bas et relié à une charge électrique, les transistors hauts et bas étant de type à effet de champ normalement fermés,
- plusieurs dispositifs de commande de Grille permettant d'appliquer chacun une tension de Grille aux transistors hauts et transistors bas pour les commander à la fermeture ou à l'ouverture,
- une résistance de limitation connectée en série sur la ligne d'alimentation négative du bus continu d'alimentation, en amont du condensateur de bus et destinée à limiter le courant de charge du condensateur de bus,
- dans le convertisseur, les dispositifs de commande de Grille des transistors bas sont chacun connectés à la ligne d'alimentation négative du bus continu d'alimentation et le convertisseur comporte une source de démarrage connectée en parallèle de la résistance de limitation et à chaque dispositif de commande de Grille des transistors bas et agencée pour se charger par une tension négative lors du démarrage du convertisseur de puissance.

Selon une particularité, la source de démarrage comporte un condensateur et une diode Zener montés en parallèle et connectés à la ligne d'alimentation négative et au dispositif de commande de Grille de chaque transistor bas.

Selon une autre particularité, la source de démarrage comporte également une résistance et une diode connectées d'une part à la diode Zener et d'autre part à la résistance de limitation.

Selon une autre particularité, la source de démarrage est connectée à chaque dispositif de commande de Grille des transistors bas via une résistance.

Selon une autre particularité, le convertisseur de puissance comporte un interrupteur connecté en parallèle de la résistance de limitation.

Selon une autre particularité, les transistors hauts et les transistors bas des bras de commutation sont de type JFET.

Selon une autre particularité, les transistors hauts et les transistors bas de type JFET sont fabriqués en carbure de silicium ou nitrure de gallium.

### Brève description des figures

D'autres caractéristiques et avantages vont apparaître dans la description détaillée qui suit faite en regard des dessins annexés dans lesquels :
- la figure 1 représente le schéma d'un convertisseur de puissance selon l'invention,
- la figure 2 représente un transistor bas du module onduleur du convertisseur de puissance de l'invention et son dispositif de commande.

### Description détaillée d'au moins un mode de réalisation

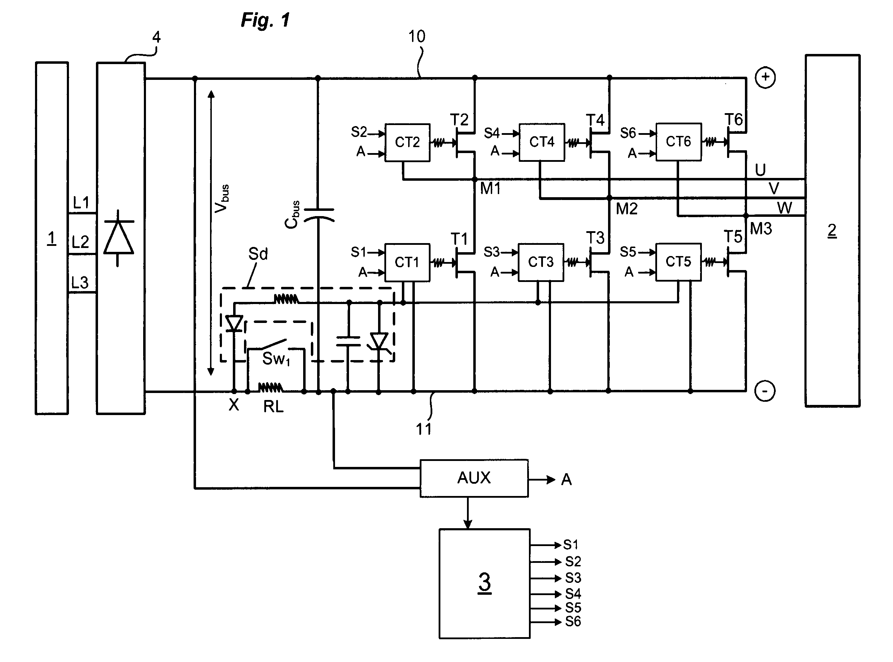

Un convertisseur de puissance est par exemple destiné à appliquer une tension de sortie à une charge électrique 2. En référence à la figure 1, un convertisseur de puissance comporte par exemple :
- un bus continu d'alimentation recevant une tension redressée et doté d'une ligne d'alimentation positive 10 et d'une ligne d'alimentation négative 11,
- un condensateur de bus C_{bus} connecté d'une part à la ligne d'alimentation positive 10 du bus continu d'alimentation et d'autre part à la ligne d'alimentation négative 11 du bus continu d'alimentation et destiné à maintenir constante la tension continue V_{bus} du bus continu d'alimentation,
- un module onduleur connecté au bus continu d'alimentation, en aval du condensateur de bus C_{bus}, comportant n phases et ayant au moins 2 transistors de commutation sur chaque phase. Sur la figure 1, le module onduleur est à trois phases U, V, W et comporte donc trois bras de commutation connectés chacun à la ligne d'alimentation positive 10 et à la ligne d'alimentation négative 11 du bus continu d'alimentation. Chaque bras de commutation comporte un transistor haut T2, T4, T6 et un transistor bas T1, T3, T5 séparés par un point milieu de connexion M1, M2, M3 destiné à être relié à la charge électrique 2.
- une résistance de limitation RL appelée également résistance de précharge montée en série sur la ligne d'alimentation négative 11, entre le module redresseur 4 et le condensateur de bus C_{bus} et en parallèle de laquelle est monté un interrupteur S_{W1}. Cette résistance de limitation RL est active au démarrage pendant la phase de charge du bus continu d'alimentation. Dans un variateur de vitesse, elle permet de limiter le courant d'entrée à travers le module redresseur 4. Une fois le condensateur de bus C_{bus} chargé, la résistance de limitation RL est court-circuitée par le premier interrupteur Sw₁ monté en parallèle.

Comme représenté sur la figure 1, un convertisseur de puissance tel qu'un variateur de vitesse comporte également en entrée :
- trois phases d'entrée L1, L2, L3 connectées à un réseau de distribution électrique 1,
- un module redresseur 4 connecté aux trois phases d'entrée L1, L2, L3 et destiné à redresser une tension alternative fournie par le réseau de distribution électrique 1, la tension redressée étant appliquée sur le bus continu d'alimentation.

Dans le module onduleur, chaque transistor T1-T6 du module de commutation est du type à effet de champ (FET pour "Field Effect Transistor"). Un transistor à effet de champ tel que par exemple un JFET ou un MOSFET est un interrupteur électronique de puissance connu qui comporte une Grille de commande (G) dont la fonction est d'autoriser ou non le passage d'un courant entre un Drain (D) et une Source (S). Un tel transistor est dit de type normalement fermé (ou "Normally ON") si son chemin Drain-Source est passant ou conducteur en l'absence de tension de commande V_{GS}. En présence d'une tension de commande V_{GS} entre sa Grille G et sa Source S qui est négative, le transistor à effet de champ normalement fermé est commandé à l'ouverture. Un transistor de type JFET est commandé à l'ouverture en appliquant une tension Grille-Source V_{GS} par exemple au moins égale à -15 Volts et un transistor de type MOSFET avec une tension V_{GS} par exemple nulle ou négative. Par ailleurs, le transistor est dit de type normalement ouvert (ou "normally OFF") si, en l'absence d'une tension V_{GS} entre Grille et Source, le chemin Drain-Source n'est pas conducteur. Il nécessite donc une tension Grille-Source V_{GS} qui soit positive pour être commandé à la fermeture. Pour un transistor de type JFET normalement ouvert, cette tension positive est par exemple comprise entre +1 Volt et +3 Volts.

Les transistors à effet de champ employés dans le convertisseur de puissance de l'invention seront par exemple fabriqués dans un matériau à grande énergie de bande interdite (appelé également "matériau à grand gap" ou "wide-band gap material") tel que par exemple le carbure de silicium ou le nitrure de gallium. De manière connue, un transistor JFET réalisé dans un matériau à grande énergie de bande interdite et de type normalement fermé présente les avantages d'être plus rapide à commuter, de générer moins de pertes en conduction à l'état passant (faible résistance R_{DSon} à l'état passant), d'avoir une meilleure tenue en température et d'avoir une taille plus petite. Dans la suite de la description et sur la figure 1, les transistors T1-T6 utilisés sont par exemple de type JFET normalement fermé.

Chaque transistor à effet de champ T1-T6 des bras de commutation est commandé à l'ouverture grâce à un dispositif spécifique de commande CT1-CT6 de Grille, via une résistance de Grille R_{G}. Chaque dispositif de commande CT1-CT6 de Grille est alimenté (A) grâce à un système d'alimentation auxiliaire AUX connecté à la ligne d'alimentation positive 10 et à la ligne d'alimentation négative 11 du bus continu d'alimentation et permet d'appliquer au transistor une tension de Grille V_{G} pour commander le transistor à la fermeture ou à l'ouverture. En plus de l'alimentation (A), chaque dispositif de commande CT1-CT6 reçoit d'un système central de commande 3 des signaux de commande S1 à S6 à modulation de largeur d'impulsion (PWM en anglais pour "Pulse Width Modulation") respectant une loi de commande exécutée par le système central de commande 3.

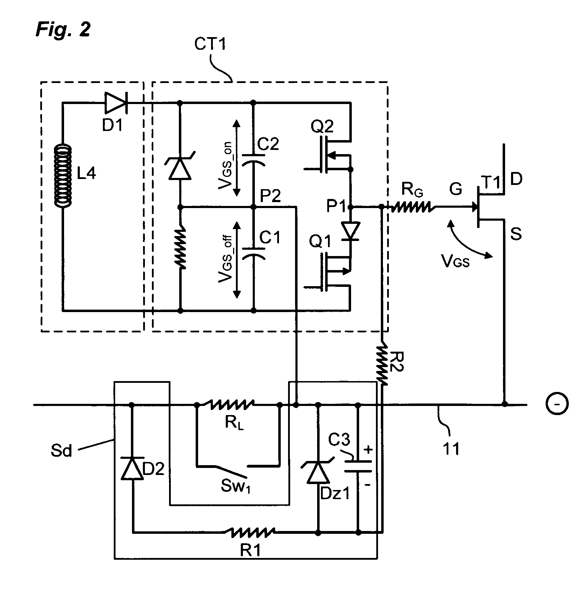

En référence à la figure 2, un dispositif de commande de Grille, tel que celui du transistor bas T1, comporte notamment deux transistors Q1, Q2 de type MOSFET reliés en série par l'intermédiaire d'un point milieu de connexion P1 connecté à la Grille G du transistor T1, via la résistance de Grille R_{G}, et un ensemble de deux condensateurs C1, C2 montés également en série. Un point milieu de connexion P2 situé entre les deux condensateurs C1, C2 est connecté à la ligne négative 11 du bus continu d'alimentation, c'est-à-dire à la Source S du transistor commandé (ici T1). Le transistor Q1 du dispositif de commande est du type normalement ouvert tandis que le transistor Q2 du dispositif de commande est du type normalement fermé. Le système d'alimentation auxiliaire AUX alimente le dispositif de commande de Grille à travers une diode D1 et une inductance L4 qui constitue le secondaire du transformateur du système d'alimentation auxiliaire AUX en générant les tensions V_{GS_ON} et V_{GS_OFF} nécessaires respectivement à la fermeture et à l'ouverture du transistor T1. A partir des tensions V_{GS_ON} et V_{GS_OFF}, les transistors Q1, Q2 appliquent la tension de Grille V_{G} au transistor JFET pour le commander à l'ouverture ou à la fermeture.

Dans la suite de la description, on considérera que chaque dispositif de commande de Grille présente la même architecture et se décrit par les mêmes références.

Chaque dispositif de commande de Grille CT2, CT4, CT6 des transistors hauts T2, T4, T6 est par exemple connecté au point milieu de connexion M1, M2, M3 du bras de commutation de son transistor tandis que chaque dispositif de commande CT1, CT3, CT5 des transistors bas T1, T3, T5 est connecté, par son point milieu P2, à la Source du transistor bas T1, T3, T5 commandé.

Par ailleurs, le convertisseur comporte également une source de démarrage Sd activée lors du démarrage du convertisseur de puissance pour commander les transistors bas T1, T3, T5 du module onduleur à l'ouverture le temps du démarrage et ainsi permettre la charge du condensateur de bus C_{bus}.

Préférentiellement, la source de démarrage Sd est commune à tous les transistors bas T1, T3, T5 du module onduleur et permet ainsi de commander les trois bras de commutation à l'ouverture lors du démarrage du convertisseur de puissance.

Cette source de démarrage Sd comporte un condensateur C3 connecté à la ligne d'alimentation négative 11 du bus continu d'alimentation, à la Source S de chaque transistor bas, et au point milieu P1 des deux transistors Q1, Q2 de chaque dispositif de commande de Grille des transistors bas T1, T3, T5 via une résistance R2, formant une impédance entre le point P1 et la source de démarrage Sd. La source de démarrage Sd comporte également une diode Zener Dz1 connectée également à la ligne négative 11 du bus continu d'alimentation, à la Source S de chaque transistor bas, et au point milieu P1 via la résistance R2. Par ailleurs, la source de démarrage Sd comporte également une résistance R1 et une diode D2 connectées d'une part à la diode Zener Dz1 et au condensateur C3 et d'autre part à une borne de la résistance de limitation.

La source de démarrage Sd est ainsi connectée en parallèle de la résistance de limitation RL et à chaque dispositif de commande de Grille CT1, CT3, CT5 des transistors bas T1, T3, T5.

Le fonctionnement du convertisseur de puissance de l'invention est explicité ci-dessous en se focalisant sur un seul bras de commutation et sur le transistor bas T1. Il faut comprendre que le fonctionnement est similaire pour les autres bras de commutation.

A l'état initial, aucune tension d'entrée n'est appliquée sur le bus continu d'alimentation. La tension du bus continu d'alimentation V_{bus} est donc nulle et le système d'alimentation auxiliaire AUX n'est pas activé. Les transistors T1-T6 du module de commutation sont à l'état fermé.

Au démarrage du variateur de vitesse, les tensions V_{DS1} et V_{DS2} entre Drain et Source des deux transistors T1, T2 du bras de commutation sont nulles étant donné que ces transistors sont en conduction. Le système d'alimentation auxiliaire AUX n'est pas encore activé et ne peut donc fournir une tension suffisante en vue du blocage de ces transistors T1, T2. Comme les bras de commutation court-circuitent le condensateur de bus C_{bus}, le courant qui traverse ces bras de commutation et la résistance de limitation RL entraîne une chute de tension aux bornes de la résistance de limitation RL. Cette chute de tension aux bornes de la résistance de limitation RL entraîne le chargement du condensateur C3, créant une tension négative entre la Grille G et la Source S du transistor T1. Lorsque la tension aux bornes du condensateur C3 devient inférieure à une tension seuil correspondant à la tension de blocage du transistor T1, le transistor T1 est commuté à l'état ouvert, permettant alors la charge du condensateur de bus.

Une fois que le système d'alimentation auxiliaire AUX a terminé son démarrage, il peut alimenter les dispositifs de commandes CT1-CT6 des transistors T1-T6 du module onduleur. Les transistors T1-T6 peuvent donc être commandés directement à l'ouverture par leur dispositif de commande CT1-CT6. Une fois le condensateur de bus C_{bus} chargé, la résistance de limitation RL peut être court-circuitée par l'interrupteur S_{W1} lors du fonctionnement normal du variateur de vitesse.

Par un montage simple et peu onéreux, il est ainsi possible de s'affranchir des contraintes liées à l'emploi de composants normalement fermés dans le module onduleur d'un variateur de vitesse.

## Revendications

1. Convertisseur de puissance destiné à la commande d'une charge électrique (2), comportant :
- un bus continu d'alimentation sur lequel est appliquée une tension redressée et comportant une ligne d'alimentation positive (10) et une ligne d'alimentation négative (11),
- un module onduleur connecté en amont au bus continu d'alimentation et en aval à plusieurs phases de sortie (U, V, W),
- un condensateur de bus (C_{bus}), connecté à la ligne d'alimentation positive (10) et à la ligne d'alimentation négative (11) du bus continu d'alimentation,
- le module onduleur comportant plusieurs bras de commutation connectés entre la ligne d'alimentation positive (10) et la ligne d'alimentation négative (11) du bus continu d'alimentation, chaque bras de commutation comportant un transistor haut (T2, T4, T6) et un transistor bas (T1, T3, T5) en série et un point milieu de connexion (M1, M2, M3) situé entre le transistor haut et le transistor bas et relié à une charge électrique (2), les transistors hauts et bas étant de type à effet de champ normalement fermés,
- plusieurs dispositifs de commande de Grille (CT1-CT6) permettant d'appliquer chacun une tension de Grille aux transistors hauts et transistors bas pour les commander à la fermeture ou à l'ouverture,
- les dispositifs de commande de Grille des transistors bas (T1, T3, T5) étant chacun connectés à la ligne d'alimentation négative (11) du bus continu d'alimentation
**caractérisé en ce que** :
- le convertisseur comporte une résistance de limitation (RL) connectée en série sur la ligne d'alimentation négative (11) du bus continu d'alimentation, en amont du condensateur de bus (C_{bus}) et destinée à limiter le courant de charge du condensateur de bus (C_{bus}), et une source de démarrage (Sd) connectée en parallèle de la résistance de limitation (RL) et à chaque dispositif de commande de Grille (CT1, CT3, CT5) des transistors bas (T1, T3, T5) et agencée pour se charger par une tension négative lors du démarrage du convertisseur de puissance.

2. Convertisseur de puissance selon la revendication 1, **caractérisé en ce que** la source de démarrage comporte un condensateur (C3) et une diode Zener (Dz1) montés en parallèle et connectés à la ligne d'alimentation négative (11), et au dispositif de commande de Grille de chaque transistor bas.

3. Convertisseur de puissance selon la revendication 2, **caractérisé en ce que** la source de démarrage comporte également une résistance (R1) et une diode (D2) connectées d'une part à la diode Zener (Dz1) et d'autre part à la résistance de limitation (RL).

4. Convertisseur de puissance selon la revendication 1, **caractérisé en ce que** la source de démarrage (Sd) est connectée à chaque dispositif de commande de Grille (CT1, CT3, CT5) des transistors bas (T1, T3, T5) via une résistance (R2).

5. Convertisseur de puissance selon la revendication 1, **caractérisé en ce qu'**il comporte un interrupteur (Sw₁) connecté en parallèle de la résistance de limitation (RL).

6. Convertisseur de puissance selon la revendication 1, **caractérisé en ce que** les transistors hauts et les transistors bas (T1-T6) des bras de commutation sont de type JFET.

7. Convertisseur de puissance selon la revendication 1, **caractérisé en ce que** les transistors hauts et les transistors bas de type JFET sont fabriqués en carbure de silicium ou nitrure de gallium.

## Patentansprüche

1. Leistungswandler zur Steuerung einer elektrischen Last (2), der aufweist :
- einen Versorgungs-Gleichstrombus, an den eine gleichgerichtete Spannung angelegt wird und der eine positive Versorgungsleitung (10) und eine negative Versorgungsleitung (11) aufweist,
- ein Wechselrichtermodul, das stromaufwärts an den Versorgungs-Gleichstrombus und stromabwärts an mehrere Ausgangsphasen (U, V, W) angeschlossen ist,
- einen Buskondensator (C_{bus}), der an die positive Versorgungsleitung (10) und an die negative Versorgungsleitung (11) des Versorgungs-Gleichstrombusses angeschlossen ist,
- wobei das Wechselrichtermodul mehrere Schaltarme aufweist, die zwischen der positiven Versorgungsleitung (10) und der negativen Versorgungsleitung (11) des Versorgungs-Gleichstrombusses angeschlossen sind, wobei jeder Schaltarm einen oberen Transistor (T2, T4, T6) und einen unteren Transistor (T1, T3, T5) in Reihe geschaltet und einen Anschlussmittelpunkt (M1, M2, M3) aufweist, der sich zwischen dem oberen Transistor und dem unteren Transistor befindet und mit einer elektrischen Last (2) verbunden ist, wobei die oberen und unteren Transistoren von der Art normalerweise geschlossener Feldeffekttransistor sind,
- mehrere Gate-Steuervorrichtungen (CT1-CT6), die es ermöglichen, je eine Gate-Spannung an die oberen Transistoren und unteren Transistoren anzulegen, um sie in Sperrrichtung und Öffnungsrichtung zu steuern,
- wobei die Gate-Steuervorrichtungen der unteren Transistoren (T1, T3, T5) je an die negative Versorgungsleitung (11) des Versorgungs-Gleichstrombusses angeschlossen sind,
**dadurch gekennzeichnet, dass**:
- der Wandler einen Begrenzungswiderstand (RL), der mit der negativen Versorgungsleitung (11) des Versorgungs-Gleichstrombusses stromaufwärts vor dem Buskondensator (C_{bus}) in Reihe geschaltet und dazu bestimmt ist, den Ladestrom des Buskondensators (C_{bus}) zu begrenzen, und eine Startquelle (Sd) aufweist, die mit dem Begrenzungswiderstand (RL) und mit jeder Gate-Steuervorrichtung (CT1, CT3, CT5) der unteren Transistoren (T1, T3, T5) parallelgeschaltet und eingerichtet ist, um sich beim Start des Leistungswandlers mit einer negativen Spannung zu laden.

2. Leistungswandler nach Anspruch 1, **dadurch gekennzeichnet, dass** die Startquelle einen Kondensator (C3) und eine Zener-Diode (Dz1) aufweist, die parallelgeschaltet und an die negative Versorgungsleitung (11) und an die Gate-Steuervorrichtung jedes unteren Transistors angeschlossen sind.

3. Leistungswandler nach Anspruch 2, **dadurch gekennzeichnet, dass** die Startquelle ebenfalls einen Widerstand (R1) und eine Diode (D2) aufweist, die einerseits an die Zener-Diode (Dz1) und andererseits an den Begrenzungswiderstand (RL) angeschlossen sind.

4. Leistungswandler nach Anspruch 1, **dadurch gekennzeichnet, dass** die Startquelle (Sd) an jede Gate-Steuervorrichtung (CT1, CT3, CT5) der unteren Transistoren (T1, T3, T5) über einen Widerstand (R2) angeschlossen ist.

5. Leistungswandler nach Anspruch 1, **dadurch gekennzeichnet, dass** er einen Schalter (Sw₁) aufweist, der mit dem Begrenzungswiderstand (RL) parallelgeschaltet ist.

6. Leistungswandler nach Anspruch 1, **dadurch gekennzeichnet, dass** die oberen Transistoren und die unteren Transistoren (T1-T6) der Schaltarme von der Art JFET sind.

7. Leistungswandler nach Anspruch 1, **dadurch gekennzeichnet, dass** die oberen Transistoren und die unteren Transistoren von der Art JFET aus Siliciumcarbid oder aus Galliumnitrid hergestellt sind.

## Claims

1. Power converter designed to control an electrical load (2), comprising:
- a DC power supply bus to which a rectified voltage is applied and comprising a positive power supply line (10) and a negative power supply line (11),
- an inverter module connected upstream to the DC power supply bus and downstream to several output phases (U, V, W),
- a bus capacitor (C_{bus}), connected to the positive power supply line (10) and to the negative power supply line (11) of the DC power supply bus,
- the inverter module comprising several switching arms connected between the positive power supply line (10) and the negative power supply line (11) of the DC power supply bus, each switching arm comprising an upper transistor (T2, T4, T6) and a lower transistor (T1, T3, T5) in series and a centre connection point (M1, M2, M3) situated between the upper transistor and the lower transistor and connected to an electrical load (2), the upper and lower transistors being of the normally ON field-effect type,
- several Grid control devices (CT1-CT6) each allowing a Grid voltage to be applied to the upper transistors and lower transistors for controlling them so as to close or to open,
- the Grid control devices for the lower transistors (T1, T3, T5) being each connected to the negative power supply line (11) of the DC power supply bus,
**characterized in that**:
- the converter comprises a limiting resistor (RL) connected in series with the negative power supply line (11) of the DC power supply bus, upstream of the bus capacitor (C_{bus}) and designed to limit the charging current of the bus capacitor (C_{bus}), and a start-up source (Sd) connected in parallel with the limiting resistor (RL) and to each Grid control device (CT1, CT3, CT5) for the lower transistors (T1, T3, T5) and configured for charging with a negative voltage when the power converter starts up.

2. Power converter according to Claim 1, **characterized in that** the start-up source comprises a capacitor (C3) and a Zener diode (Dz1) connected in parallel and connected to the negative power supply line (11), and to the Grid control device for each lower transistor.

3. Power converter according to Claim 2, **characterized in that** the start-up source also comprises a resistor (R1) and a diode (D2) connected, on the one hand, to the Zener diode (Dz1) and, on the other hand, to the limiting resistor (RL).

4. Power converter according to Claim 1, **characterized in that** the start-up source (Sd) is connected to each Grid control device (CT1, CT3, CT5) for the lower transistors (T1, T3, T5) via a resistor (R2).

5. Power converter according to Claim 1, **characterized in that** it comprises a switch (Sw₁) connected in parallel with the limiting resistor (RL).

6. Power converter according to Claim 1, **characterized in that** the upper transistors and the lower transistors (T1-T6) of the switching arms are of the JFET type.

7. Power converter according to Claim 1, **characterized in that** the upper transistors and the lower transistors of the JFET type are fabricated in silicon carbide or gallium nitride.
